(19) Europäisches Patentamt
European Patent Office
Office européen des brevets

(11) **EP 4 535 642 A1**

(12) **EUROPÄISCHE PATENTANMELDUNG**

(43) Veröffentlichungstag:
**09.04.2025 Patentblatt 2025/15**

(21) Anmeldenummer: 23202009.9

(22) Anmeldetag: **06.10.2023**

(51) Internationale Patentklassifikation (IPC):
**H02P 3/22** *(2006.01)*  **B25F 5/00** *(2006.01)*
**H02P 6/24** *(2006.01)*

(52) Gemeinsame Patentklassifikation (CPC):
**H02P 3/22; B25F 5/00; H02P 6/24;** B28D 1/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Scherbaum, Markus**
**86853 Gennach (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM BREMSEN EINER WERKZEUGMASCHINE MIT MINDESTENS ZWEI ENERGIEVERSORGUNGSVORRICHTUNGEN UND WERKZEUGMASCHINE**

(57)     Die vorliegende Erfindung betrifft ein Verfahren zum Bremsen einer Werkzeugmaschine, wobei die Werkzeugmaschine eine akkubetriebene Werkzeugmaschine ist und mit mindestens einer ersten Energieversorgungsvorrichtung und einer zweiten Energieversorgungsvorrichtung verbindbar ist, um mit elektrischer Energie versorgt zu werden. Die elektrische Energie, die beim Bremsen der Werkzeugmaschine frei wird, wird in die erste Energieversorgungsvorrichtung und/oder die zweite Energieversorgungsvorrichtung der Werkzeugmaschine zurückgespeist. Die Energieversorgungsvorrichtungen sind in Reihe geschaltet sind und das Verfahren kann eine aktive Regelung einer Zwischenkreisspannung umfassen, bei der ein Grenzwert der Zwischenkreisspannung U_Zwischenkreis, Limit kleiner ist als eine Summe der Grenzwerte der Spannungen U_Akkupack, Limit der Energieversorgungsvorrichtungen. In einem zweiten Aspekt betrifft die Erfindung eine Werkzeugmaschine zur Durchführung des Bremsverfahrens.

**Fig. 2**

EP 4 535 642 A1

## EP 4 535 642 A1

**Beschreibung**

Die vorliegende Erfindung betrifft ein Verfahren zum Bremsen einer Werkzeugmaschine, wobei die Werkzeugmaschine eine akkubetriebene Werkzeugmaschine ist und mit mindestens einer ersten Energieversorgungsvorrichtung und einer zweiten Energieversorgungsvorrichtung verbindbar ist, um mit elektrischer Energie versorgt zu werden. Die elektrische Energie, die beim Bremsen der Werkzeugmaschine frei wird, wird in die erste Energieversorgungsvorrichtung und/oder die zweite Energieversorgungsvorrichtung der Werkzeugmaschine zurückgespeist. Die Energieversorgungsvorrichtungen sind in Reihe geschaltet sind und das Verfahren kann eine aktive Regelung einer Zwischenkreisspannung umfassen, bei der ein Grenzwert der Zwischenkreisspannung U_Zwischenkreis, Limit kleiner ist als eine Summe der Grenzwerte der Spannungen U_Akkupack, Limit der Energieversorgungsvorrichtungen. In einem zweiten Aspekt betrifft die Erfindung eine Werkzeugmaschine zur Durchführung des Bremsverfahrens.

**Hintergrund der Erfindung:**

Im Stand der Technik sind Werkzeugmaschinen bekannt, die mit mehr als einer Energieversorgungsvorrichtung verbunden werden können, um mit elektrischer Energie versorgt zu werden. Diese Energieversorgungsvorrichtungen werden häufig in Reihe geschaltet, um die Systemspannung zu erhöhen oder um Anwendungen mit höheren Leistungsanforderungen bewältigen zu können. Daneben kann durch die Verwendung von mehr als einer Energieversorgungsvorrichtung die Reichweite der Energieversorgungsvorrichtungen bzw. deren Laufzeit erhöht werden. Werkzeugmaschinen sollen schnell zum Stillstand gebracht werden. Dadurch kann ein langes Auslaufen der Werkzeugmaschine oder ihres Werkzeugs vermieden werden, wobei vor allem während eines solchen Auslaufens Unfälle passieren oder Verletzungen des Nutzers der Werkzeugmaschine auftreten.

Die beim Bremsen einer Werkzeugmaschine freiwerdende elektrische Energie kann in die Energieversorgungsvorrichtungen der Werkzeugmaschine zurückgespeist werden («Rekuperation»). Beim Zurückspeisen der Energie ist darauf zu achten, dass die Energieversorgungsvorrichtungen durch Überlastung oder dergleichen nicht beschädigt werden. Dies kann vor allem dann eine Herausforderung darstellen, wenn die Werkzeugmaschine mehr als eine Energieversorgungsvorrichtung umfasst, da beispielsweise auftretende Spannungen und/oder Ströme ungleichmäßig auf die vorhandenen Energieversorgungsvorrichtungen verteilt sein können. Durch solche asymmetrischen Verteilungen können Situationen auftreten, in denen die einzelnen Energieversorgungsvorrichtungen so ungleich belastet werden, dass dadurch die Rekuperation oder andere Eigenschaften der Werkzeugmaschine negativ beeinflusst werden. Wenn beispielsweise für eine der mehreren Energieversorgungsvorrichtungen ein Strom- und/oder Spannungsgrenzwert überschritten wird, eine andere Energieversorgungsvorrichtung aber noch deutlich unterhalb eines solchen Strom- und/oder Spannungsgrenzwerts arbeitet, kann entweder eine der Energieversorgungsvorrichtungen überlastet und damit der Gefahr von Beschädigungen ausgesetzt werden, während die andere Energieversorgungsvorrichtung möglicherweise unter ihren Möglichkeiten bleibt, so dass beispielsweise weniger elektrische Energie in die Energieversorgungsvorrichtungen zurückgespeist wird, als technisch möglich wäre.

Die Aufgabe, die der vorliegenden Erfindung zugrunde liegt, besteht darin, die vorstehend beschriebenen Mängel und Nachteile des Standes der Technik zu überwinden und Verfahren zum Abbremsen einer Werkzeugmaschine mit zwei Energieversorgungsvorrichtungen, sowie eine solche Werkzeugmaschine bereitzustellen, mit denen einerseits ein möglichst wirksamer Schutz eines Nutzers der Werkzeugmaschine ermöglicht wird, andererseits eine Werkzeugmaschine mit einer besonders langen Laufzeit bzw. Batterie-Reichweite bereitgestellt werden kann, d.h. dass elektrische Energie möglichst effizient in die Energieversorgungsvorrichtungen der Werkzeugmaschine zurückgespeist wird, dies insbesondere dann, wenn die Werkzeugmaschine zwei Energieversorgungsvorrichtungen aufweist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Bremsen einer Werkzeugmaschine vorgesehen, wobei die Werkzeugmaschine eine akkubetriebene Werkzeugmaschine ist und mit mindestens einer ersten Energieversorgungsvorrichtung und einer zweiten Energieversorgungsvorrichtung verbindbar ist, um mit elektrischer Energie versorgt zu werden. Die elektrische Energie, die beim Bremsen der Werkzeugmaschine frei wird, wird in die erste Energieversorgungsvorrichtung und/oder die zweite Energieversorgungsvorrichtung der Werkzeugmaschine zurückgespeist. Die Energieversorgungsvorrichtungen sind in Reihe geschaltet, wobei ein Grenzwert der Zwischenkreisspannung U_Zwischenkreis, Limit kleiner ist als eine Summe der Grenzwerte der Spannungen U_Akkupack, Limit der Energieversorgungsvorrichtungen. Es ist im Sinne der Erfindung bevorzugt, dass mit dem vorgeschlagenen Bremsverfahren die Werkzeugmaschine selbst, ihr Motor oder das Werkzeug der Werkzeugmaschine abgebremst werden können.

Mit dem Verfahren ist es vorteilhafterweise möglich, die freiwerdende Bremsenergie besonders effizient in die Energieversorgungsvorrichtungen zurückzuspeisen. Es ist im Sinne der Erfindung bevorzugt, dass die Werkzeugmaschine zur Versorgung mit elektrischer Energie mit mindestens zwei Energieversorgungsvorrichtungen verbindbar ist. Das Verfahren kann für eine erste und eine zweite Energieversorgungsvorrichtung beschrieben werden, ist aber selbstverständlich ebenso anwendbar für Werkzeugmaschine mit drei, vier, fünf, sechs, sieben oder mehr Energieversorgungsvorrichtungen. Diese weiteren Energieversorgungsvorrichtungen könnten als «n-te Energieversorgungsvorrichtung» bezeichnet werden (vgl. insbesondere die Figuren). Beispielsweise kann die Werkzeugmaschine Aufnahmebereiche bzw. Möglichkeiten zur Ankoppelung von zwei oder mehr Energieversorgungsvorrichtungen aufweisen. Es ist im Sinne der Erfindung bevorzugt, dass die Begriffe Akkumulator («Akku»), Batterie, Akkupack und Energieversorgungsvorrichtung synonym verwendet werden. Ebenso ist es im Sinne der Erfindung bevorzugt, die Begriffe «Grenzwert» und «Limit» synonym zu verwenden. Es ist im Sinne der Erfindung bevorzugt, die Regelung der Rekuperation bzw. des Bremsvorgangs als Verfahrensschritt S1 zu bezeichnen.

Vorzugsweise kann der Grenzwert der Zwischenkreisspannung so ermittelt werden, dass auch bei einer stark asymmetrischen Aufteilung der Spannung auf die Energieversorgungsvorrichtungen der Spannungsgrenzwert einer jeden Energieversorgungsvorrichtung der Werkzeugmaschine nicht überschritten wird. Dadurch kann vorteilhafterweise erreicht werden, dass die Zwischenkreisspannung bei Rekuperation nicht den Grenzwert der Zwischenkreisspannung U_Zwischenkreis, Limit überschreitet. Auf diese Weise können dann vorteilhafterweise auch die Spannungs-Grenzwerte der einzelnen Energieversorgungsvorrichtungen eingehalten werden. Mit der Erfindung kann vorteilhafterweise sichergestellt werden, dass auch in einem Werkzeugmaschinen-System mit mehreren Energieversorgungsvorrichtungen, die in Reihe geschaltet vorliegen, die zulässigen Strom- und Spannungs-Grenzwerte eingehalten werden. Dazu kann die Werkzeugmaschine eine Elektronik bzw. eine Motor-Elektronik umfassen, die die Rekuperation in die verschiedenen Energieversorgungsvorrichtungen entsprechend steuert. Es ist im Sinne der Erfindung ganz besonders bevorzugt, dass ein maximaler Rekuperationsstrom und eine maximale Akkupack-Spannung nicht überschritten werden.

Es ist im Sinne der Erfindung bevorzugt, dass eine Spannung des Systems aus Werkzeugmaschine und Energieversorgungsvorrichtungen überwacht wird. Diese Überwachung kann beispielsweise durch die Elektronik bzw. Motorelektronik der Werkzeugmaschine sichergestellt werden. Diese Spannung des Systems aus Werkzeugmaschine und Energieversorgungsvorrichtungen kann im Sinne der Erfindung bevorzugt als «Systemspannung» bezeichnet werden. Darüber hinaus ist es im Sinne der Erfindung bevorzugt, eine Zwischenkreisspannung bei der Rekuperation zu überwachen, um eine zulässige Maximalspannung der Energieversorgungsvorrichtungen nicht zu überschreiten. Mit der Erfindung kann dies vorteilhafterweise dadurch sichergestellt werden, dass der Grenzwert der Zwischenkreisspannung U_Zwischenkreis, Limit kleiner ist als eine Summe der Grenzwerte der Spannungen U_Akkupack, Limit der Energieversorgungsvorrichtungen. Dadurch kann insbesondere vermieden werden, dass bei einer der Energieversorgungsvorrichtungen das Spannungslimit für die Rekuperation bereits überschritten ist, während die Spannung bei einer anderen Energieversorgungsvorrichtung noch deutlich unter dem Grenzwert liegt. Tests haben gezeigt, dass die Erfindung insbesondere dann gute Ergebnisse zeigt, wenn die Energieversorgungsvorrichtungen unterschiedliche Ladungszustände, unterschiedliche Temperaturen und dadurch beding unterschiedliche Innenwiderstände aufweisen, so dass sich die Zwischenkreisspannung besonders asymmetrisch auf die Spannungen der Energieversorgungsvorrichtungen aufteilt. In diesen Fällen kann durch die Erfindung eine besonders effiziente Rekuperation der elektrischen Energie ermöglicht werden.

Es ist im Sinne der Erfindung ganz besonders bevorzugt, den Rekuperationsstrom auf kleinere Werte zu begrenzen, um die Spannungsanhebung bei Rekuperation so gering zu halten, dass die Spannung der Energieversorgungsvorrichtungen unter allen Betriebsbedingungen der Werkzeugmaschine nicht die entsprechenden Strom- und Spannungsgrenzwerte überschreitet. Dies kann vorteilhafterweise dadurch erreicht werden, dass der Grenzwert der Zwischenkreisspannung U_Zwischenkreis, Limit kleiner ist als eine Summe der Grenzwerte der Spannungen U_Akkupack, Limit der Energieversorgungsvorrichtungen. Es hat sich gezeigt, dass auf diese Weise eine größtmögliche Rekuperation in einem System mit einer Werkzeugmaschine und mehreren in Reihe geschalteten Energieversorgungsvorrichtungen bereitgestellt werden kann. Insbesondere ermöglicht die Erfindung eine aktive Regelung der Zwischenkreisspannung, wobei diese aktive Regelung vorzugsweise durch eine Anpassung des Bremsvorgangs der Werkzeugmaschine erreicht wird. Dadurch kann vorteilhafterweise erreicht werden, dass die Energieversorgungsvorrichtungen zwar im Bereich ihrer Leistungslimits betrieben werden, ohne jedoch die Grenzwerte für Strom- und/oder Spannung zu überschreiten.

Die Erfindung stellt insbesondere ein Verfahren zur Rekuperation in eine Reihenschaltung mehrerer Energieversorgungsvorrichtungen dar, wobei das Verfahren ein Überschreiten einer maximal zulässigen Spannung der in Reihe geschalteten Energieversorgungsvorrichtungen verhindert. Die Erfindung ermöglicht vorteilhafterweise eine optimale Rekuperation in einer Reihenschaltung aus mehreren Energieversorgungsvorrichtungen. Es stellt einen besonderen Vorteil der Erfindung dar, dass durch die optimierte Rekuperation auch die Bremszeit, in der die Werkzeugmaschine bzw. ihr Werkzeug zum Stillstand gebracht werden kann, minimiert werden kann, so dass die Nutzung der Werkzeugmaschine für den Nutzer besonders sicher ist.

Bei Werkzeugmaschinen mit einer Reihenschaltung von Energieversorgungsvorrichtungen können die Energieversorgungsvorrichtungen während des Betriebs der Werkzeugmaschine bzw. während des Zurückspeisens von elektrischer Energie in die Energieversorgungsvorrichtungen unterschiedliche Eigenschaften erlangen bzw. aufweisen. Die Energieversorgungsvorrichtungen können sich beispielsweise hinsichtlich ihres Ladezustands, der Temperatur und/oder des Innenwiderstands unterscheiden. Durch die Erfindung kann das Zurückspeisen der elektrischen Energie in die Energieversorgungsvorrichtungen maximiert werden, was vorteilhafterweise gleichzeitig dazu führt, dass die Bremszeit für die Werkzeugmaschine minimiert werden kann. Denn eine besonders kurze Bremszeit bietet einen besonders guten Schutz für den Nutzer der Werkzeugmaschine vor Verletzungen. Ein Vorteil der Erfindung besteht darin, dass die Grenzwerte der in Reihe geschalteten Energieversorgungsvorrichtungen bestmöglich ausgenutzt werden können, ohne die Strom- und Spannungslimits einer einzelnen Energieversorgungsvorrichtung innerhalb der Reihenschaltung zu überschreiten. Mit der Erfindung kann eine aktive Regelung der Zwischenkreisspannung durch Anpassung des Bremsvorgangs ermöglicht werden, so dass die Grenzwerte der Energieversorgungsvorrichtungen zwar (fast) erreicht, aber nicht überschritten werden. Dabei handelt es sich bei den Grenzwerten der Energieversorgungsvorrichtungen vorzugsweise um die Grenzwerte für die Spannung und den Strom.

Es ist im Sinne der Erfindung bevorzugt, dass der Grenzwert der Zwischenkreisspannung U_Zwischenkreis, Limit dadurch erhalten wird, dass der Grenzwert der Spannungen U_Akkupack, Limit mit einer Anzahl n der Energieversorgungsvorrichtungen und einem Faktor k_Unbalance multipliziert wird. Der Erfinder hat erkannt, dass der asymmetrischen Aufteilung der Spannung auf die unterschiedlichen Energieversorgungsvorrichtungen dadurch begegnet werden kann, dass ein sog. Unbalance-Faktor k_Unbalance eingeführt wird, mit dem die Reihenschaltung der Grenzwerte der Spannung U_Akkupack, Limit der Energieversorgungsvorrichtungen multipliziert werden kann. Darüber hinaus wird der Grenzwert der Spannung U_Akkupack, Limit der Energieversorgungsvorrichtungen mit der Anzahl n der Energieversorgungsvorrichtungen multipliziert, um den Grenzwert der Zwischenkreisspannung U_Zwischenkreis, Limit zu erhalten. Es ist im Sinne der Erfindung bevorzugt, dass die Berechnung des Unbalance-Faktors als Verfahrensschritt S2 zu bezeichnen wird.

Bei der Berechnung des Grenzwerts der Zwischenkreisspannung U_Zwischenkreis, Limit als Produkt aus dem Grenzwert der Spannungen U_Akkupack, Limit, der Anzahl n der Energieversorgungsvorrichtungen und der Faktor k_Unbalance wird davon ausgegangen, dass die Spannungsgrenzwerte der Energieversorgungsvorrichtungen, die in einer Werkzeugmaschine verwendet werden, gleich groß oder im Wesentlichen gleich groß sind. Daher kann der konstante oder im Wesentlichen konstante Spannungsgrenzwert U_Akkupack, Limit mit der Anzahl n der Energieversorgungsvorrichtungen multipliziert werden, um die Summe der Grenzwerte der Spannungen der Energieversorgungsvorrichtungen zu erhalten. Wenn die Grenzwerte der Spannungen der Energieversorgungsvorrichtungen nicht für alle Energieversorgungsvorrichtungen der Werkzeugmaschine gleich sind, kann das Produkt aus der Anzahl n der Energieversorgungsvorrichtungen und dem Grenzwert der Spannungen U_Akkupack, Limit durch eine Summe

$$\sum_{1}^{n} U_{Akkupack,Limit,Akku,n}$$

ersetzt werden. Um den Grenzwert der Zwischenkreisspannung U_Zwischenkreis, Limit zu erhalten, kann diese Summe anschließend mit dem Unbalance-Faktor k_Unbalance multipliziert werden.

Es ist im Sinne der Erfindung bevorzugt, dass der Faktor k_Unbalance zwischen 0 und 1 liegt. Dabei kann der Faktor k_Unbalance auch die Grenzwerte 0 und 1 annehmen, wobei ein Faktor k_Unbalance mit dem Wert 1 im Sinne der Erfindung bevorzugt bedeutet, dass kein Ungleichgewicht zwischen den Energieversorgungsvorrichtungen, d.h. keine «Unbalance», vorliegt. In diesem Fall verhalten sich die Energieversorgungsvorrichtungen der Werkzeugmaschine alle gleich oder im Wesentlichen gleich. Vorzugsweise steht ein hoher Unbalance-Faktor k_Unbalance, der im Bereich von 1 liegt, für Energieversorgungsvorrichtungen, die sich sehr ähnlich verhalten, während ein kleiner Unbalance-Faktor k_Unbalance, der in der Nähe von 0 liegt, für eine große Ungleichheit zwischen dem Verhalten der einzelnen Energieversorgungsvorrichtungen der Werkzeugmaschine steht.

Es ist im Sinne der Erfindung bevorzugt, dass im Rahmen des vorgeschlagenen Verfahrens ein Grenzwert eines Rekuperationsstroms I_Rekuperation, Limit nicht überschritten wird. In dieser Ausgestaltung der Erfindung kann eine aktive Regelung des Rekuperationsstroms durch Anpassung des Bremsvorgangs ermöglicht werden, so dass die Grenzwerte der Energieversorgungsvorrichtungen zwar (fast) erreicht, aber nicht überschritten werden. Es ist im Sinne der Erfindung bevorzugt, dass der Strom bei einer Reihenschaltung durch alle Energieversorgungsvorrichtungen gleich oder im Wesentlichen gleich ist, so dass der Grenzwert für den Rekuperationsstrom besonders einfach für alle Energieversorgungsvorrichtungen sichergestellt werden kann. Vorteilhafterweise werden bei dieser Ausgestaltung der Erfindung nicht nur die Spannungsgrenzwerte der Energieversorgungsvorrichtungen eingehalten, sondern auch die maximal zulässigen Rekuperationsströme der in Reihe geschalteten Energieversorgungsvorrichtungen. Vorzugsweise ist bei einer Reihenschaltung der Strom durch die Energieversorgungsvorrichtungen gleich bzw. im Wesentlichen gleich, so dass dieser konstante oder im Wesentlichen konstante Strom von der Werkzeugmaschine bzw. ihrer Elektronik besonders einfach auf den maximal zulässigen Rekuperationsstrom überwacht werden kann.

Es ist im Sinne der Erfindung bevorzugt, dass der Grenzwert eines Rekuperationsstroms I_Rekuperation, Limit einem Minimum der Grenzwerte der Rekuperationsströme der Energieversorgungsvorrichtungen entspricht. Das bedeutet im Sinne der Erfindung bevorzugt, dass der Grenzwert eines Rekuperationsstroms I_Rekuperation, Limit aus dem Minimum der Rekuperationsstromgrenzwerte der in Reihe geschalteten Energieversorgungsvorrichtungen ermittelt werden kann.

Eine mögliche Berechnung des Faktors k_Unbalance bei einer Reihenschaltung von zwei Akkupacks wird im folgenden Anwendungsbeispiel der Erfindung erläutert. Die Bezeichnungen U_Akku, 1 und U_Akku, 2 stehen dabei bevorzugt für die Spannungen der ersten und der zweiten Energieversorgungsvorrichtungen, die während der Rekuperation gemessen werden. Wenn die Spannung U_Akku, 1, die an der ersten Energieversorgungsvorrichtung gemessen wird, größer ist als die Spannung U_Akku, 2, die an der zweiten Energieversorgungsvorrichtung gemessen wird, dann kann der Faktor k_Unbalance wie folgt berechnet werden:

$$k_{Unbalance} = 0.5 + U_{Akku,2}/(2*U_{Akku,1})$$

In den anderen Fällen kann der Faktor k_Unbalance wie folgt berechnet werden:

$$k_{Unbalance} = 0.5 + U_{Akku,1}/(2*U_{Akku,2})$$

Durch die unterschiedlichen Berechnungen des Faktors k_Unbalance, je nachdem, wie sich die Spannungen der Energieversorgungsvorrichtungen der Werkzeugmaschine zueinander verhalten, kann vorteilhafterweise der Faktor k_Unbalance für alle möglichen Zustände des Systems aus Werkzeugmaschine und Energieversorgungsvorrichtungen berechnet werden. Für Werkzeugmaschinen, die von mehr als zwei Energieversorgungsvorrichtungen mit elektrischer Energie versorgt werden, kann der Fachmann die obige Fallunterscheidung und Formel entsprechend anpassen.

Es ist im Sinne der Erfindung bevorzugt, dass die Spannungsmessungen und/oder die Update-Rate der Berechnung des Faktors k_Unbalance mit einer Periodendauer erfolgen, die deutlich kürzer ist als die Anstiegszeit des Rekuperationsstroms. Auf diese Weise kann sichergestellt werden, dass während des Anstiegs der Rekuperation eine etwaige asymmetrische Spannungsaufteilung zwischen den Energieversorgungsvorrichtungen ausreichend engmaschig überwacht wird. Dies kann insbesondere dadurch erreicht werden, dass die elektrischen Parameter der Werkzeugmaschine bzw. der Energieversorgungsvorrichtungen regelmäßig durch Messungen ermittelt werden, so dass in regelmäßigen Abständen der Faktor k_Unbalance berechnet und ggf. angepasst werden kann. Insbesondere kann auf diese Weise besonders schnell und flexibel auf Änderungen der Betriebsparameter der Energieversorgungsvorrichtungen, wie Ladungszustand, Temperatur und/oder Innenwiderstand, reagiert werden, um ein größtmögliches Zurückspeisen von elektrischer Energie in die Energieversorgungsvorrichtungen zu gewährleisten.

In einem zweiten Aspekt betrifft die Erfindung eine Werkzeugmaschine zur Durchführung des vorgeschlagenen Verfahrens. Die für das Bremsverfahren eingeführten Begriffe, Definitionen und technischen Vorteile gelten vorzugsweise für die Werkzeugmaschine analog. Die Werkzeugmaschine ist vorzugsweise dazu eingerichtet, die Werkzeugmaschine selbst, ihren Motor oder das Werkzeug der Werkzeugmaschine abzubremsen. Es ist im Sinne der Erfindung besonders bevorzugt, dass das Werkzeug der Werkzeugmaschine durch das vorgeschlagene Bremsverfahren zum Stillstand oder im Wesentlichen zum Stillstand gebracht wird. Die Formulierung «im Wesentlichen zum Stillstand bringen» bedeutet im Sinne der Erfindung bevorzugt, dass dem Werkzeug, dem Motor und/oder der Werkzeugmaschine ein Großteil der kinetischen Rotationsenergie entzogen wird, so dass die Werkzeugmaschine abgebremst wird.

Der Motor der Werkzeugmaschine kann vorzugsweise ein bürstenloser Motor, der vorzugsweise eine Leistung von mehr als 1,8 Kilowatt (kW) abgeben kann. Vorzugsweise kann es sich bei der Werkzeugmaschine um ein bürstenlos gesteuertes Elektrogerät mit Bremsfunktion handeln. Beispielsweise kann die Werkzeugmaschine als elektrisch betriebener Trennschleifer ausgebildet sein. Es ist im Sinne der Erfindung ganz besonders bevorzugt, dass es sich bei der Werkzeugmaschine um einen akkubetriebenen Trennschleifer mit einer Trennscheibe als Werkzeug handelt. Die Werkzeugmaschine kann mit mindestens zwei Energieversorgungsvorrichtungen verbunden werden, um von den Energieversorgungsvorrichtungen mit elektrischer Energie versorgt zu werden. Die Energieversorgungsvorrichtungen der Werkzeugmaschine können beispielsweise eine Spannung von mehr als 20 Volt (V) abgeben. Besonders bevorzugt ist eine NennSpannung zwischen 21 und 22 V. Die Werkzeugmaschine kann auch drei oder mehr Energieversorgungsvorrichtungen aufweisen. Der Fachmann weiß, dass diese Spannung - je nach Ladungszustand der Energieversorgungsvorrichtungen - abweichen kann.

Die Trennscheibe stellt ein scheibenförmiges Werkzeug des Trennschleifers dar, das mit dem vorgeschlagenen Bremsverfahren abgebremst und zum Stillstand gebracht werden kann. Die Trennscheibe kann einen Durchmesser aufweisen, der beispielsweise größer als 230 Millimeter (mm) ist. Beispielsweise kann die Trennscheibe Durchmesser von 300 mm, 250 mm oder 400 mm aufweisen, ohne darauf beschränkt zu sein. Ein Gewicht der Trennscheibe kann beispielsweise in einem Bereich zwischen 200 und 2.500 Gramm, d.h. zwischen 0,2 und 2,5 Kilogramm (kg), liegen. Beispielsweise kann das Gewicht der Trennscheibe Werte von 210 Gramm, 530 Gramm, 550 Gramm, 930 Gramm, 1.270 Gramm, 1.280 Gramm, 1.720 Gramm oder 2.450 Gramm annehmen, ohne darauf beschränkt zu sein. Beispielsweise kann es sich bei der Trennscheibe mit eine Diamant-Trennscheibe oder um eine abrasive Trennscheibe mit gebundenen Schleifkörnern handeln. Ein Diamant-Trennscheibe ist vorzugsweise dadurch gekennzeichnet, dass sie einen Stahlkern mit Diamant-Segmenten aufweist. Selbstverständlich ist die Erfindung nicht nur auf die Anwendung in einem Trennschleifer beschränkt, sondern das vorgeschlagene Verfahren kann in vielen anderen Werkzeugmaschinen oder Elektrogeräten, die auf einer Baustelle verwendet werden, eingesetzt werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1 mögliches Blockschaltbild für die Berechnung der Rekuperationslimits bei einer Reihenschaltung von mehreren Energieversorgungsvorrichtungen

Fig. 2 schematische Darstellung einer Werkzeugmaschine mit zwei Energieversorgungsvorrichtungen

## Ausführungsbeispiele und Figurenbeschreibung:

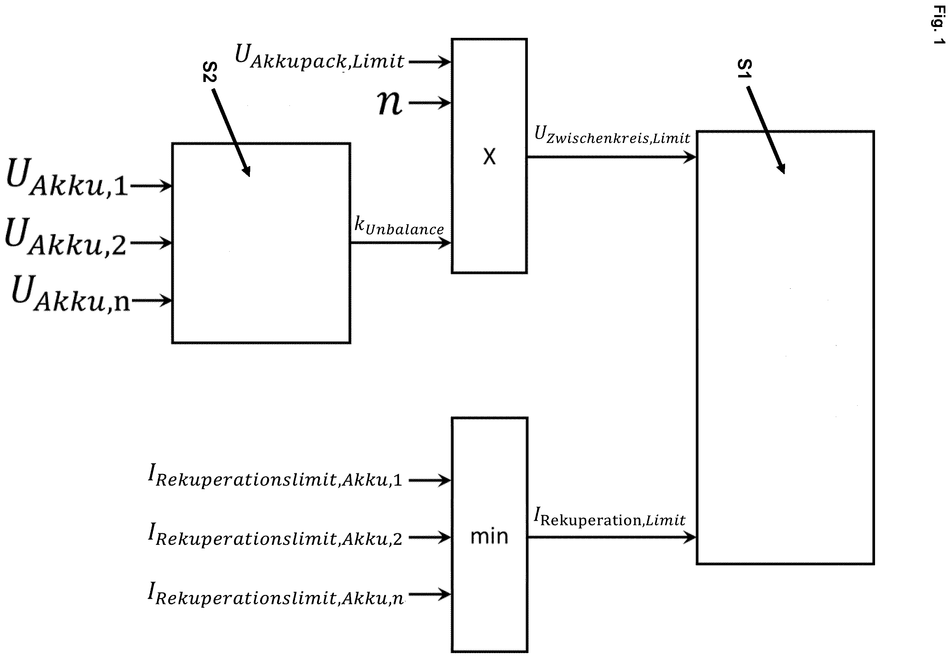

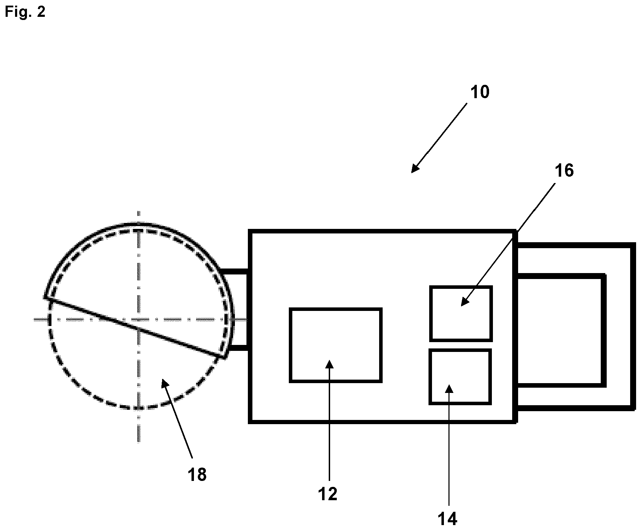

Figur 1 zeigt ein mögliches Blockschaltbild für die Berechnung der Rekuperationslimits bei einer Reihenschaltung von mehreren Energieversorgungsvorrichtungen 14, 16 in einer Werkzeugmaschine 10. Die Werkzeugmaschine 10 wird schematisch in Figur 2 dargestellt. Das in Figur 1 dargestellte Blockschaltbild zeigt insbesondere die Verfahrensschritte S1: Regelung der Rekuperation bzw. des Bremsvorgangs und S2: Berechnung des Unbalance-Faktors k_Unbalance.

Gemäß dem in Figur 1 abgebildeten Blockschaltbild werden die Spannungen, die bei der Rekuperation für die einzelnen Energieversorgungsvorrichtungen 14, 16 in der Werkzeugmaschine 10 gemessen werden, verwendet, um den Faktor k_Unbalance zu berechnen. In Figur 1 sind insbesondere die Spannungen der ersten Energieversorgungsvorrichtung 14, der zweiten Energieversorgungsvorrichtung 16 und einer n-ten Energieversorgungsvorrichtung (ohne Bezugszeichen) dargestellt, die Eingang in die Berechnung des Faktors k_Unbalance finden. Der Faktor k_Unbalance kann anschließend mit dem Grenzwert U_Akkupack, Limit der Energieversorgungsvorrichtungen 14, 16 und der Anzahl n der Energieversorgungsvorrichtungen 14, 16 multipliziert werden, wobei die Multiplikation durch das «x» in dem Blockschaltbild symbolisiert wird. Auf diese Weise wird der Grenzwert U_Zwischenkreis, Limit für die Zwischenkreisspannung erhalten. Dieser Grenzwert U_Zwischenkreis, Limit für die Zwischenkreisspannung wird anschließend für den Verfahrensschritt S1: Regelung der Rekuperation bzw. des Bremsvorgangs verwendet. In die Regelung der Rekuperation bzw. des Bremsvorgangs kann insbesondere auch der maximal zulässige Rekuperationsstrom I_Rekuperation, Limit Eingang finden. Der maximal zulässige Rekuperationsstrom I_Rekuperation, Limit stellt vorzugsweise den Grenzwert für den Rekuperationsstrom I_Rekuperation dar. Der Grenzwert I_Rekuperation, Limit für den Rekuperationsstrom berechnet sich vorzugsweise aus dem Minimum der Rekuperationsstromgrenzwerte der einzelnen Energieversorgungsvorrichtungen 14, 16, die bei der vorgeschlagenen Werkzeugmaschine 10 in Reihe geschaltet vorliegen. Die Berechnung aus dem Minimum wird in dem in Figur 1 dargestellten Blockschaltbild durch die Bezeichnung «min» zum Ausdruck gebracht. Der Rekuperationsstromgrenzwert der ersten Energieversorgungsvorrichtung 14 wird in Figur 1 vorzugsweise als I_Rekuperationlimit, Akku, 1 bezeichnet, während der Grenzwert für den Rekuperationsstrom für die zweite Energieversorgungsvorrichtung 16 in Figur 1 vorzugsweise als I_Rekuperationlimit, Akku, 2 bezeichnet wird. Der Grenzwert für den Rekuperationsstrom für die n-te Energieversorgungsvorrichtung wird in Figur 1 vorzugsweise als I_Rekuperationlimit, Akku, n bezeichnet.

Figur 2 zeigt eine schematische Darstellung einer Werkzeugmaschine 10 mit zwei Energieversorgungsvorrichtungen 14, 16. Die Werkzeugmaschine 10 kann darüber hinaus einen Motor 12 aufweisen, der vorzugsweise als bürstenloser Motor ausgebildet ist. Selbstverständlich kann die Werkzeugmaschine 10 darüber hinaus viele weitere Komponenten aufweisen, wie eine Elektronik, ein Werkzeug 18, eine Werkzeugaufnahme und/oder Aufnahmevorrichtungen für die Energieversorgungsvorrichtungen 14, 16, ohne darauf beschränkt zu sein. Das Werkzeug 18 der Werkzeugmaschine 10 kann von einem Blattschutz (ohne Bezugszeichen) umgeben werden, um den Nutzer der Werkzeugmaschine 10 vor Funken- oder Späneflug zu schützen. Selbstverständlich kann die Werkzeugmaschine 10 auch Griffe (ohne Bezugszeichen) aufweisen, mit denen der Nutzer die Werkzeugmaschine transportieren oder bei der Arbeit führen kann.

**Bezugszeichenliste**

| | |
|---|---|
| 10 | Werkzeugmaschine |
| 12 | Motor |
| 14 | erste Energieversorgungsvorrichtung |
| 16 | zweite Energieversorgungsvorrichtung |
| 18 | Werkzeug |
| S1 | Regelung der Rekuperation bzw. des Bremsvorgangs |
| S2 | Berechnung des Unbalance-Faktors |

**Patentansprüche**

1. Verfahren zum Bremsen einer Werkzeugmaschine (10), wobei die Werkzeugmaschine (10) eine akkubetriebene Werkzeugmaschine ist und mit mindestens einer ersten Energieversorgungsvorrichtung (14) und einer zweiten Energieversorgungsvorrichtung (16) verbindbar ist, um mit elektrischer Energie versorgt zu werden, wobei elektrische Energie, die beim Bremsen der Werkzeugmaschine (10) frei wird, in die erste Energieversorgungsvorrichtung (14) und/oder die zweite Energieversorgungsvorrichtung (16) der Werkzeugmaschine (10) zurückgespeist wird, wobei die Energieversorgungsvorrichtungen (14, 16) in Reihe geschaltet sind,
**dadurch gekennzeichnet, dass**
ein Grenzwert der Zwischenkreisspannung U_Zwischenkreis, Limit kleiner ist als eine Summe der Grenzwerte der Spannungen U_Akkupack, Limit der Energieversorgungsvorrichtungen (14, 16).

2. Verfahren nach Anspruch 1
**dadurch gekennzeichnet, dass**
der Grenzwert der Zwischenkreisspannung U_Zwischenkreis, Limit dadurch erhalten wird, dass der Grenzwert der Spannungen U_Akkupack, Limit mit einer Anzahl n der Energieversorgungsvorrichtungen (14, 16) und einem Faktor k_Unbalance multipliziert wird.

3. Verfahren nach Anspruch 2
**dadurch gekennzeichnet, dass**
der Faktor k_Unbalance zwischen 0 und 1 liegt.

4. Verfahren nach einem der vorhergehenden Ansprüche
**dadurch gekennzeichnet, dass**
ein Grenzwert eines Rekuperationsstroms I_Rekuperation, Limit nicht überschritten wird.

5. Verfahren nach Anspruch 4
**dadurch gekennzeichnet, dass**
der Grenzwert eines Rekuperationsstroms I_Rekuperation, Limit einem Minimum der Grenzwerte der Rekuperationsströme der Energieversorgungsvorrichtungen (14, 16) entspricht.

6. Werkzeugmaschine (10) zur Durchführung des Verfahrens nach einem der vorhergehenden Ansprüche.

7. Werkzeugmaschine (10) nach Anspruch 6
**dadurch gekennzeichnet, dass**
ein Motor (12) der Werkzeugmaschine (10) ein bürstenloser Motor ist.

**Fig. 1**

**Fig. 2**

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 101682 A1 (METABOWERKE GMBH [DE]) 9. Juni 2022 (2022-06-09) | 1,6 | INV. H02P3/22 |
| Y | * Absätze [0047], [0080], [0112]; Abbildungen 1,3 * | 4,5,7 | B25F5/00 H02P6/24 |
| | ----- | | |
| Y | US 2023/105559 A1 (WANG WENWEI [CN] ET AL) 6. April 2023 (2023-04-06) * Absatz [0205] * | 4 | |
| | ----- | | |
| Y | US 2022/344960 A1 (MAYER STEFAN [DE] ET AL) 27. Oktober 2022 (2022-10-27) * Absatz [0035] * | 5 | |
| | ----- | | |
| Y | US 2018/013360 A1 (ESHLEMAN SCOTT J [US] ET AL) 11. Januar 2018 (2018-01-11) * Anspruch 1 * | 7 | |
| | ----- | | |
| A | US 2021/091588 A1 (STICKEL WOLFGANG [DE]) 25. März 2021 (2021-03-25) * Absatz [0086] * | 1-7 | |
| | ----- | | |

**RECHERCHIERTE SACHGEBIETE (IPC)**

H02P
B25H
B25F

Der vorliegende Recherchenbericht wurde für alle Patentansprüche erstellt

| Recherchenort | Abschlußdatum der Recherche | Prüfer |
|---|---|---|
| München | 12. März 2024 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 20 2009**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**12-03-2024**

| Im Recherchenbericht angeführtes Patentdokument | Datum der Veröffentlichung | Mitglied(er) der Patentfamilie | Datum der Veröffentlichung |
|---|---|---|---|
| DE 102021101682 A1 | 09-06-2022 | KEINE | |
| US 2023105559 A1 | 06-04-2023 | AU 2021244766 A1 | 27-10-2022 |
| | | CA 3173514 A1 | 30-09-2021 |
| | | EP 4131708 A1 | 08-02-2023 |
| | | US 2023105559 A1 | 06-04-2023 |
| | | WO 2021190612 A1 | 30-09-2021 |
| US 2022344960 A1 | 27-10-2022 | CN 114245959 A | 25-03-2022 |
| | | EP 3800722 A1 | 07-04-2021 |
| | | EP 4038687 A1 | 10-08-2022 |
| | | US 2022344960 A1 | 27-10-2022 |
| | | WO 2021063740 A1 | 08-04-2021 |
| US 2018013360 A1 | 11-01-2018 | EP 3267574 A1 | 10-01-2018 |
| | | US 2018013360 A1 | 11-01-2018 |
| US 2021091588 A1 | 25-03-2021 | KEINE | |

EPO FORM P0461

Für nähere Einzelheiten zu diesem Anhang : siehe Amtsblatt des Europäischen Patentamts, Nr.12/82